# EUROPEAN PATENT SPECIFICATION

(11) **EP 3 046 061 B1**
(45) Date of publication and mention of the grant of the patent: **16.12.2020**
(21) Application number: 15275008.9
(22) Date of filing: 13.01.2015
(51) Int. Cl.: G06Q 10/08, G06Q 10/00

(54) **Method of obtaining at least one operating parameter of an electrical substation component**
Verfahren zur Herstellung mindestens eines Betriebsparameters einer elektrischen Unterstationskomponente
Procédé d'obtention d'au moins un paramètre de fonctionnement d'un composant de sous-station électrique

(43) Date of publication of application: 20.07.2016
(73) Proprietor: ALSTOM Technology Ltd, 5400 Baden (CH)
(72) Inventor: RICHARDS, Simon, Staffordshire WS15 3DZ (GB); JENKINS, Dylan, 10999 Berlin (DE); WEBB, Darren, Walsall WS1 2DH (GB)
(74) Representative: Brevalex

(56) References cited:
- WO-A2-99/04326
- DE-A1-102009 020 472
- US-A1- 2005 240 498
- US-A1- 2005 279 833

## Description

This invention relates to a method of obtaining at least one operating parameter of an electrical substation component.

Electrical substation components, such as intelligent electronic devices (IED), are installed in electrical power systems, typically in an electricity generation, transmission, distribution, industrial or transport system. The electrical substation components are sited in electrical substations, and their purpose is to measure, protect, control and monitor the system to which they are connected.

### SUMMARY

The invention is directed to a method of obtaining at least one operating parameter of an electrical substation component according to the appended claims.

### DETAILED DESCRIPTION

It will be appreciated that the electrical substation component may be, but is not limited to, an intelligent electronic device.

For the purposes of this specification, an operating parameter corresponding to the electrical substation component is defined as a parameter involved in the performance of the installation, commissioning (such as configuration, setting and testing), normal operation and/or maintenance of the electrical substation component.

The ability of the electronic module to retrieve the at least one operating parameter from the machine-readable code saves a user the time and effort in manually retrieving the at least one operating parameter from the electrical substation component, thus permitting performance of the aforementioned tasks in a more time-efficient and reliable manner. This is particularly beneficial when the user has to deal with a high number of electrical substation components, all of which are located in the same vicinity, e.g. in the same electrical substation.

The ability of the electronic module to automatically form the direct network connection with a given electrical substation component improves the work productivity of the user, who would not have to spend time manually selecting the relevant electrical substation component from a list of electrical substation components on the communications network and manually initiating the direct network connection with the electrical substation component.

The ability of the electronic module to compare the validation parameters and provide the error message in response to a difference between the validation parameters provides an automatic means of validating the at least one operating parameter of the electrical substation component. This removes the need for the user to either navigate through the control software of the electrical substation component to perform the validation or manually extract the at least one validation parameter and operating a separate software tool to compare the at least one validation parameter with the at least one predefined validation parameter.

Using a machine-readable code that is in non-human-readable format enables more information to be stored in the machine-readable code, since there is no requirement to ensure that all of the information stored in the machine-readable code is also readable by a human.

The type of electronic module used in the method of the invention may vary so long as the electronic module in question is able to visually read the at least one operating parameter from the machine-readable code. For example, the electronic module may be a personal computer, laptop, smartphone or tablet with an optical interface able to visually read the at least one operating parameter from the machine-readable code.

Configuring the electronic module to visually read the machine-readable code may, for example, include taking a photograph or recording a video of the machine-readable code.

In embodiments of the invention, the at least one operating parameter may be or may include at least one identification parameter corresponding to the electrical substation component. The electronic module may be able to visually read the at least one identification parameter from the machine-readable code. The method may include the steps of:
- storing at least one target identification parameter in the electronic module;
- configuring the electronic module to visually read the machine-readable code and thereby retrieve the at least one identification parameter from the machine readable code;
- configuring the electronic module to compare the at least one identification parameter with the at least one target identification parameter;
wherein the electronic module is configured to confirm a positive identification of the electrical substation component when the at least one identification parameter matches the at least one target identification parameter.

The ability of the electronic module to positively identify an electrical substation component enables a user to automatically identify a target electrical substation component simply by configuring the electronic module to visually read the machine-readable code.

Each of the at least one identification parameter and the at least one target identification parameter may be or may include, but is not limited to, a name, model, serial number, and/or an operating function of the electrical substation component.

The at least one network connection parameter may be or may include, but is not limited to, a network identification, an internet protocol address, a service set identification, and/or network connection speed.

In still further embodiments of the invention, the at least one operating parameter may be or may include at least one setting parameter corresponding to the present configuration of the electrical substation component. The electronic module may be able to visually read the at least one setting parameter from the machine-readable code. The method may include the step of configuring the electronic module to visually read the at least one setting parameter from the machine-readable code and thereby retrieve the at least one setting parameter from the machine-readable code.

The ability of the electronic module to retrieve at least one setting parameter provides a time-efficient and reliable means of obtaining information corresponding to the present configuration of the electrical substation component, as opposed to relying on a user to manually obtain the at least one setting parameter, for example, by way of navigation of the associated control software.

The at least one setting parameter may be, but is not limited to, a control setting parameter, e.g. a software control setting parameter.

Each of the at least one validation parameter and the at least one predefined validation parameter may be or may include a checksum or version identifier, such as a software version identifier or a hardware version identifier.

The machine-readable code may be or may include, but is not limited to, a bar code. Examples of a bar code include, but are not limited to, a linear bar code (i.e. a 1-dimensional bar code) or a matrix bar code (i.e. a 2-dimensional bar code), the latter of which may be a quick response (QR) code.

The method may include the step of providing the machine-readable code on a display screen, preferably a human-machine interface screen.

Such a method may include the step of operating the electrical substation component to provide the machine-readable code on the display screen prior to the step of configuring the electronic module to visually read the machine-readable code.

In such embodiments the machine-readable code may be a dynamic machine-readable code. The method may include the step of operating the electrical substation component to configure the dynamic machine-readable code to include at least one real-time operating parameter of the electrical substation component prior to or at the same time as the step of operating the electrical substation component to provide the machine-readable code on the display screen.

Accordingly there would be no need to manually obtain the at least one real-time operating parameter of the electrical substation component. This not only enables retrieval of the at least one real-time operating parameter in a time-efficient manner, but also the potentially adverse effects of human error arising during manual retrieval of the real-time information, thus providing a reliable means of automatically obtaining real-time information on the at least one operating parameter of the electrical substation component.

In addition a dynamic machine-readable code provided on a display screen is advantageous over a static machine-readable code provided in a hardware format (e.g. a label or sticker) in that the dynamic machine-readable code provided on the display screen can be readily updated to include at least one real-time operating parameter in order to reflect the active and configured status of the electrical substation component. Meanwhile the static machine-readable code cannot be updated to include any real-time operating parameter of the electrical substation component, and thus can only include a limited amount of information such as unconfigured hardware information, which does not reflect the active and configured status of the electrical substation component.

A preferred embodiment of the invention will now be described, by way of a non-limiting example, with reference to the accompanying figure in which:
Figure 1 shows a block diagram of a method according to an embodiment of the invention; and
Figure 2 shows an exemplary machine-readable code for use in the method of Figure 1.

An electrical substation typically includes a high number of electrical substation components, such as intelligent electronic devices (IEDs). The intelligent electronic devices require a degree of interaction with substation personnel from time to time. Such interaction may include, for example, actions to commission the IEDs (such as configuration, setting and testing), maintain and troubleshoot the IEDs, periodically test the IEDs, obtain protected circuit fault data from the IED, or verify that a given IED has the correct configuration for its application.

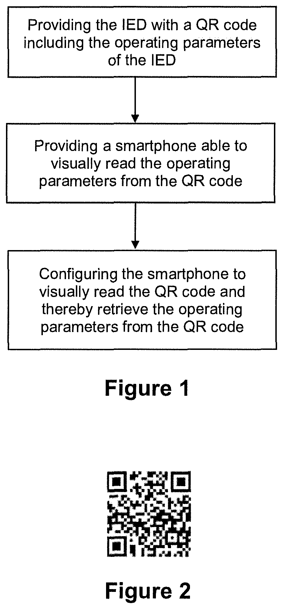

Prior to the interaction with a given IED, the substation personnel finds the given IED among the plurality of IEDs (which could number in the tens, hundreds or more), and retrieves at least one operating parameter from the IED, whereby the at least one operating parameter is required to interact with the given IED. These actions are described below in further detail with reference to Figure 1.

Figure 1 shows a method of obtaining at least one operating parameter of the IED.

The IED is provided with a machine-readable code in the form of a QR code. More specifically the IED can be operated to provide the QR code on a human-machine interface (HMI) display screen. This may be carried out, for example, through a press of a button or as part of a series of steps in a workflow process. The QR code includes operating parameters of the electrical substation component, such as identification parameters, a network connection parameters, setting parameters corresponding to the present configuration of the IED, and validation parameters.

In this embodiment, the QR code is a dynamic machine-readable code, i.e. the QR code can be configured to include the real-time operating parameters of the IED, either before or at the same time as operating the IED to provide the QR code on the HMI display screen.

The substation personnel is provided with an electronic module in the form of a smartphone with an in-built camera. The provision of the in-built camera enables the smartphone to visually read the operating parameters from the QR code. The substation personnel can then configure the smartphone to visually read the QR code by pointing the in-built camera at the QR code. This enables the smartphone to retrieve the operating parameters from the QR code.

Both the IED and smartphone are configured to be in communication with a communications network, which may be wireless or wired. For example, the communications network may be in the form of a wireless local area network (WLAN), such as a Wi-Fi communications network.

Retrieval of the operating parameters from the QR code enables the smartphone to automatically carry out a range of functions in order to help the substation personnel interact with the electrical substation component.

Retrieval of the identification parameters from the QR code permits the smartphone to perform positive identification of the IED through automatic identification of a target IED simply by visually reading the machine-readable code. This is carried out by storing corresponding target identification parameters in the smartphone so that an application installed in the smartphone can compare the read identification parameters with the target identification parameters. If the read identification parameters matches the target identification parameters, the smartphone informs the substation personnel that positive identification of the IED is confirmed.

The ability of the smartphone to positively identify a given IED can be employed when the substation personnel first enters the vicinity of the IED. If the substation personnel is aware of the physical location of the IED, he or she can then point the smartphone to the IED to visually read the corresponding QR code to allow the smartphone to perform the positive identification process in order to confirm that the correct IED has been selected. If the substation personnel is not aware of the physical location of the IED among a plurality of IEDs, he or she could point the smartphone to any IED to visually read the corresponding QR code to allow the smartphone to perform the positive identification process until the correct IED has been selected.

Each identification parameter may be or may include, but is not limited to, an IED name, an IED model, an IED serial number, and/or an operating function of the IED.

Retrieval of the network connection parameters from the QR code permits the smartphone to automatically form a direct network connection between the smartphone and the IED. The network connection parameters may be or may include, but is not limited to, a network identification, an internet protocol address, a service set identification, and/or network connection speed, depending on whether the communications network is wireless or wired.

Since the network connection parameters can dynamically change, the QR code can be configured to include the real-time network connection parameters of the IED, either before or at the same time as operating the IED to provide the QR code on the HMI display screen.

Once the smartphone has retrieved the network connection parameters, it can then apply the network connection parameters to form a direct network connection with the electrical substation component so as to enable communication between the smartphone and IED via a digital communication link. In other words, automatic discovery of the IED by the smartphone becomes possible. This then allows the substation personnel to directly communicate and interact with the IED via the communications network.

The ability of the smartphone to automatically form the direct network connection with a given IED improves the work productivity of the user, who would not have to spend time manually selecting the relevant IED from a list of IEDs on the communications network and manually initiating the direct network connection with the IED.

Retrieval of the settings parameters from the QR code permits the smartphone to obtain information corresponding to the present configuration of the IED. Each setting parameter may be, but is not limited to, a control setting parameter, e.g. a software control setting parameter.

Since the settings parameters can dynamically change, the QR code can be configured to include the real-time settings parameters of the IED, either before or at the same time as operating the IED to provide the QR code on the HMI display screen.

Once the smartphone has retrieved the settings parameters, the substation personnel can then use the retrieved settings parameters when interacting with the IED.

The ability of the smartphone to retrieve at least one setting parameter provides a time-efficient and reliable means of obtaining information corresponding to the present configuration of the IED, as opposed to relying on the substation personnel to manually obtain the parameters, for example, by way of navigation of the associated control software.

Retrieval of the validation parameters from the QR code permits the smartphone to automatically validate one or more operating parameters of the IED. This is carried out by storing corresponding predefined validation parameters in the smartphone so that an application installed in the smartphone can compare the read validation parameters with the predefined validation parameters. If the read validation parameters matches the predefined validation parameters, the smartphone informs the substation personnel that the operating parameters of the IED is valid. If the read validation parameters differs from the predefined validation parameters, the smartphone displays an error message to the substation personnel.

This removes the need for the substation personnel to either navigate through the control software of the IED to perform the validation or manually extract the validation parameters and operating a separate software tool to compare the validation parameters with the at least one predefined validation parameters.

Each validation parameter may be or may include a mathematical algorithm, a checksum, a hardware version identifier or a software version identifier, and may include a summary or unique reference identifier corresponding to some or all of the other operating parameters of the IED. The use of the checksum as a validation parameter enables the substation personnel to quickly verify that the configuration of the IED has not changed, while the use of the hardware version identifier enables the substation personnel to quickly verify that the hardware of the IED is up-to-date and the use of the software version identifier enables the substation personnel to quickly verify that the control software of the IED is up-to-date. This allows the substation personnel to quickly identify any tampering or any inadvertent change in the IED.

The configuration of the smartphone as set out above to retrieve the operating parameters from the QR code therefore saves the substation personnel the time and effort in not only manually retrieving the operating parameters from the IED but also performing various actions required to interact with the IED. This is particularly beneficial when the user has to deal with a high number of IEDs, all of which are located in the same electrical substation.

The QR code may be presented as a static bar code, instead of a dynamic bar code, in the form of a physical label attached to the IED. The static nature of such a bar code means that certain information such as real-time operating parameters could not be stored in the bar code.

The QR code may be replaced by any other kind of machine-readable code that is in non-human-readable format. For example, the QR code may be replaced by a linear bar code or by another type of matrix bar code.

The QR code could be configured to include additional information such as a website address that is linked to the manufacturer's website or to a webpage with documentation associated with the IED.

In this embodiment, the electronic module is a smartphone with an in-built camera, but it will be appreciated that the electronic module may be any electronic module that is able to visually read the at least one operating parameter from the machine-readable code. For example, the electronic module may be a personal computer, laptop or tablet with an in-built camera or that is connected to an external camera.

It will be understood that, whilst the embodiment is described with reference to an electrical substation component in the form of an IED, the invention applies mutatis mutandis to other types of electrical substation components.

## Claims

1. A method of obtaining at least one operating parameter of an electrical substation component, the method comprising the steps of:
providing the electrical substation component with a machine-readable code including the at least one operating parameter of the electrical substation component, wherein the machine-readable code is in non-human-readable format, and wherein the at least one operating parameter is or includes at least one network connection parameter corresponding to the electrical substation component and at least one validation parameter corresponding to the electrical substation component;
providing an electronic module able to visually read the at least one operating network connection parameter and the at least one validation parameter from the machine-readable code, wherein the electrical substation component and the electronic module are each in communication with a communications network;
configuring the electronic module to visually read the at least one network connection parameter from the machine-readable code and thereby retrieve the at least one operating network connection parameter from the machine-readable code;
configuring the electronic module to use the at least one network connection parameter retrieved from the machine-readable code to form a direct network connection with the electrical substation component so as to enable communication between the electronic module and the electrical substation component via a digital communication link;
providing the machine-readable code on a display screen;
the method being **characterised in that** it includes the steps of:
storing at least one predefined validation parameter in the electronic module;
configuring the electronic module to visually read the machine-readable code and thereby retrieve the at least one validation parameter from the machine-readable code; and
configuring the electronic module to compare the at least one validation parameter with the at least one predefined validation parameter;
wherein the electronic module is configured to provide an error message when the at least one validation parameter differs from the at least one predefined validation parameter;
operating the electrical substation component to provide the machine-readable code on the display screen prior to the step of configuring the electronic module to visually read the machine-readable code and wherein the machine-readable code is a dynamic machine-readable code; and
operating the electrical substation component to configure the dynamic machine-readable code to include at least one real-time operating parameter of the electrical substation component prior to or at the same time as the step of operating the electrical substation component to provide the machine-readable code on the display screen.

2. A method according to Claim 1 wherein the electrical substation component is an intelligent electronic device.

3. A method according to any preceding claim wherein the at least one operating parameter is or includes at least one identification parameter corresponding to the electrical substation component, and the electronic module is able to visually read the at least one identification parameter from the machine-readable code, the method including the steps of:
storing at least one target identification parameter in the electronic module;
configuring the electronic module to visually read the machine-readable code and thereby retrieve the at least one identification parameter from the machine-readable code;
configuring the electronic module to compare the at least one identification parameter with the at least one target identification parameter;
wherein the electronic module is configured to confirm a positive identification of the electrical substation component when the at least one identification parameter matches the at least one target identification parameter.

4. A method according to Claim 3 wherein each of the at least one identification parameter and the at least one target identification parameter is or includes a name, model, serial number and/or an operating function of the electrical substation component.

5. A method according to any preceding claim wherein the at least one network connection parameter is or includes a network identification, an internet protocol address, a service set identification, and/or network connection speed.

6. A method according to any preceding claim wherein the at least one operating parameter is or includes at least one setting parameter corresponding to the present configuration of the electrical substation component, and the electronic module is able to visually read the at least one setting parameter from the machine-readable code, the method including the step of configuring the electronic module to visually read the at least one setting parameter from the machine-readable code and thereby retrieve the at least one setting parameter from the machine-readable code.

7. A method according to preceding Claim 6 wherein the at least one setting parameter is a control setting parameter.

8. A method according to any preceding claim wherein each of the at least one validation parameter and the at least one predefined validation parameter is or includes a checksum or version identifier.

9. A method according to any preceding claim wherein the machine-readable code is or includes a bar code.

10. A method according to any preceding claim wherein the electronic module is a personal computer, laptop, smartphone or tablet with an optical interface able to able to visually read the at least one operating parameter from the machine-readable code

## Patentansprüche

1. Verfahren zum Erhalten wenigstens eines Betriebsparameters einer elektrischen Umspannstationskomponente, wobei das Verfahren die folgenden Schritte umfasst:
Bereitstellen der elektrischen Umspannstationskomponente mit einem maschinenlesbaren Code, der den wenigstens einen Betriebsparameter der elektrischen Umspannstationskomponente einschließt, wobei der maschinenlesbare Code in einem von Menschen nicht lesbaren Format vorliegt und wobei der wenigstens eine Betriebsparameter wenigstens einen der elektrischen Umspannstationskomponente entsprechenden Netzwerkverbindungsparameter und wenigstens einen der elektrischen Umspannstationskomponente entsprechenden Validierungsparameter darstellt oder einschließt;
Bereitstellen eines elektronischen Moduls, das den wenigstens einen Betriebsnetzwerksverbindungsparameter und den wenigstens einen Validierungsparameter aus dem maschinenlesbaren Code visuell auslesen kann, wobei die elektrische Umspannstationskomponente und das elektronische Modul jeweils mit einem Kommunikationsnetzwerk in Kommunikation stehen;
Konfigurieren des elektronischen Moduls dahingehend, den wenigstens einen Netzwerkverbindungsparameter aus dem maschinenlesbaren Code visuell auszulesen und dadurch den wenigstens einen Betriebsnetzwerksverbindungsparameter aus dem maschinenlesbaren Code abzurufen;
Konfigurieren des elektronischen Moduls dahingehend, den wenigstens einen aus dem maschinenlesbaren Code abgerufenen Netzwerkverbindungsparameter zu verwenden, um eine direkte Netzwerkverbindung mit der elektrischen Umspannstationskomponente zu bilden, um eine Kommunikation zwischen dem elektronischen Modul und der elektronischen Umspannstationskomponente über eine digitale Kommunikationsverknüpfung zu aktivieren;
Bereitstellen des maschinenlesbaren Codes auf einem Anzeigebildschirm;
wobei das Verfahren **dadurch gekennzeichnet ist, dass** es die folgenden Schritte einschließt:
Speichern wenigstens eines vorbestimmten Validierungsparameters in dem elektronischen Modul;
Konfigurieren des elektronischen Moduls dahingehend, den maschinenlesbaren Code visuell auszulesen und dadurch den wenigstens einen Validierungsparameter aus dem maschinenlesbaren Code abzurufen; und
Konfigurieren des elektronischen Moduls dahingehend, den wenigstens einen Validierungsparameter mit dem wenigstens einen vorbestimmten Validierungsparameter zu vergleichen;
wobei das elektronische Modul dazu konfiguriert ist, eine Fehlernachricht bereitzustellen, wenn sich der wenigstens eine Validierungsparameter von dem wenigstens einen vorbestimmten Validierungsparameter unterscheidet;
Betreiben der elektrischen Umspannstationskomponente, um den maschinenlesbaren Code vor dem Schritt des Konfigurierens des elektronischen Moduls dahingehend, den maschinenlesbaren Code visuell auszulesen, auf dem Anzeigebildschirm bereitzustellen, und wobei der maschinenlesbare Code ein dynamischer maschinenlesbarer Code ist; und
Betreiben der elektrischen Umspannstationskomponente, um den dynamischen maschinenlesbaren Code dahingehend zu konfigurieren, wenigstens einen Echtzeitbetriebsparameter der elektrischen Umspannstationskomponente einzuschließen, vor oder gleichzeitig mit dem Schritt des Betreibens der elektrischen Umspannstationskomponente, um den maschinenlesbaren Code auf dem Anzeigebildschirm bereitzustellen.

2. Verfahren nach Anspruch 1, wobei die elektrische Umspannstationskomponente eine intelligente elektronische Einheit ist.

3. Verfahren nach einem vorstehenden Anspruch, wobei der wenigstens eine Betriebsparameter wenigstens einen der elektrischen Umspannstationskomponente entsprechenden Identifikationsparameter darstellt oder einschließt und das elektronische Modul den wenigstens einen Identifikationsparameter aus dem maschinenlesbaren Code auslesen kann, wobei das Verfahren die folgenden Schritte einschließt:
Speichern wenigstens eines Zielidentifikationsparameters in dem elektronischen Modul;
Konfigurieren des elektronischen Moduls dahingehend, den maschinenlesbaren Code visuell auszulesen und dadurch den wenigstens einen Identifikationsparameter aus dem maschinenlesbaren Code abzurufen;
Konfigurieren des elektronischen Moduls dahingehend, den wenigstens einen Identifikationsparameter mit dem wenigstens einen Zielidentifikationsparameter zu vergleichen;
wobei das elektronische Modul dazu konfiguriert ist, eine positive Identifikation der elektrischen Umspannstationskomponente zu bestätigen, wenn der wenigstens eine Identifikationsparameter mit dem wenigstens einen Zielidentifikationsparameter übereinstimmt.

4. Verfahren nach Anspruch 3, wobei jeder des wenigstens einen Identifikationsparameters und des wenigstens einen Zielidentifikationsparameters einen Namen, ein Modell, eine Seriennummer und/oder eine Bedienfunktion der elektrischen Umspannstationskomponente darstellt oder einschließt.

5. Verfahren nach einem vorstehenden Anspruch, wobei der wenigstens eine Netzwerkverbindungsparameter eine Netzwerkidentifikation, eine Internetprotokolladresse, eine Serviceset-Identifikation und/oder eine Netzwerkverbindungsgeschwindigkeit darstellt oder einschließt.

6. Verfahren nach einem vorstehenden Anspruch, wobei der wenigstens eine Betriebsparameter wenigstens einen Einstellparameter darstellt oder einschließt, der der vorliegenden Konfiguration der elektrischen Umspannstationskomponente entspricht, und das elektronische Modul den wenigstens einen Einstellparameter aus dem maschinenlesbaren Code visuell auslesen kann, wobei das Verfahren den Schritt des Konfigurierens des elektronischen Moduls dahingehend, den wenigstens einen Einstellparameter aus dem maschinenlesbaren Code auszulesen und dadurch den wenigstens einen Einstellparameter aus dem maschinenlesbaren Code abzurufen, einschließt.

7. Verfahren nach dem vorstehenden Anspruch 6, wobei der wenigstens eine Einstellparameter ein Steuereinstellparameter ist.

8. Verfahren nach einem vorstehenden Anspruch, wobei jeder des wenigstens einen Validierungsparameters und des wenigstens einen vorbestimmten Validierungsparameters eine Prüfsumme oder eine Versionskennung darstellt oder einschließt.

9. Verfahren nach einem vorstehenden Anspruch, wobei der maschinenlesbare Code einen Strichcode darstellt oder einschließt.

10. Verfahren nach einem vorstehenden Anspruch, wobei das elektronische Modul ein Personalcomputer, ein Laptop, ein Smartphone oder ein Tablet mit einer optischen Schnittstelle ist, die den wenigstens einen Betriebsparameter aus dem maschinenlesbaren Code visuell auslesen kann.

## Revendications

1. Procédé d'obtention d'au moins un paramètre d'exploitation d'un composant de sous-station électrique, le procédé comprenant les étapes de :
fourniture du composant de sous-station électrique avec un code lisible par une machine incluant l'au moins un paramètre d'exploitation du composant de sous-station électrique, dans lequel le code lisible par une machine est dans un format non lisible par un humain, et dans lequel l'au moins un paramètre d'exploitation est ou inclut au moins un paramètre de connexion réseau correspondant au composant de sous-station électrique et au moins un paramètre de validation correspondant au composant de sous-station électrique ;
fourniture d'un module électronique susceptible de visuellement lire l'au moins un paramètre de connexion réseau d'exploitation et l'au moins un paramètre de validation à partir du code lisible par une machine, dans lequel le composant de sous-station électrique et le module électronique sont chacun en communication avec un réseau de communication ;
configuration du module électronique pour visuellement lire l'au moins un paramètre de connexion réseau à partir du code lisible par une machine et récupérer de ce fait l'au moins un paramètre de connexion réseau d'exploitation du code lisible par une machine ;
configuration du module électronique pour utiliser l'au moins un paramètre de connexion réseau récupéré à partir du code lisible par une machine pour former une connexion réseau directe avec le composant de sous-station électrique afin de permettre une communication entre le module électronique et le composant de sous-station électrique via une liaison de communication numérique ;
fourniture du code lisible par une machine sur un écran d'affichage ;
le procédé étant **caractérisé en ce qu'**il inclut les étapes de :
stockage d'au moins un paramètre de validation prédéfini dans le module électronique ;
configuration du module électronique pour visuellement lire le code lisible par une machine et récupérer de ce fait l'au moins un paramètre de validation à partir du code lisible par une machine ; et
configuration du module électronique pour comparer l'au moins un paramètre de validation à l'au moins un paramètre de validation prédéfini ;
dans lequel le module électronique est configuré pour fournir un message d'erreur quand l'au moins un paramètre de validation diffère de l'au moins un paramètre de validation prédéfini ;
mise en œuvre du composant de sous-station électrique pour fournir le code lisible par une machine sur l'écran d'affichage avant l'étape de configuration du module électronique pour visuellement lire le code lisible par une machine et dans lequel le code lisible par une machine est un code dynamique lisible par une machine ; et
mise en œuvre du composant de sous-station électrique pour configurer le code dynamique lisible par une machine pour inclure au moins un paramètre d'exploitation en temps réel du composant de sous-station électrique avant ou en même temps que l'étape de mise en œuvre du composant de sous-station électrique pour fournir le code lisible par une machine sur l'écran d'affichage.

2. Procédé selon la revendication 1, dans lequel le composant de sous-station électrique est un dispositif électronique intelligent.

3. Procédé selon l'une quelconque des revendications précédentes, dans lequel l'au moins un paramètre d'exploitation est ou inclut au moins un paramètre d'identification correspondant au composant de sous-station électrique, et le module électronique est susceptible de visuellement lire l'au moins un paramètre d'identification à partir du code lisible par une machine, le procédé incluant les étapes de :
stockage d'au moins un paramètre d'identification cible dans le module électronique ;
configuration du module électronique pour visuellement lire le code lisible par une machine et récupérer de ce fait l'au moins un paramètre d'identification à partir du code lisible par une machine ;
configuration du module électronique pour comparer l'au moins un paramètre d'identification à l'au moins un paramètre d'identification cible ;
dans lequel le module électronique est configuré pour confirmer une identification positive du composant de sous-station électrique quand l'au moins un paramètre d'identification correspond à l'au moins un paramètre d'identification cible.

4. Procédé selon la revendication 3, dans lequel chacun de l'au moins un paramètre d'identification et de l'au moins un paramètre d'identification cible est ou inclut un nom, un modèle, un numéro de série et/ou une fonction d'exploitation du composant de sous-station électrique.

5. Procédé selon l'une quelconque des revendications précédentes, dans lequel l'au moins un paramètre de connexion réseau est ou inclut une identification de réseau, une adresse de protocole Internet, une identification de réseau sans fil, et/ou une vitesse de connexion réseau.

6. Procédé selon l'une quelconque des revendications précédentes, dans lequel l'au moins un paramètre d'exploitation est ou inclut au moins un paramètre de réglage correspondant à la configuration présente du composant de sous-station électrique, et le module électronique est susceptible de visuellement lire l'au moins un paramètre de réglage à partir du code lisible par une machine, le procédé incluant l'étape de configuration du module électronique pour visuellement lire l'au moins un paramètre de réglage à partir du code lisible par une machine et récupérer de ce fait l'au moins un paramètre de réglage à partir du code lisible par une machine.

7. Procédé selon la revendication 6 précédente, dans lequel l'au moins un paramètre de réglage est un paramètre de réglage de commande.

8. Procédé selon l'une quelconque des revendications précédentes, dans lequel chacun de l'au moins un paramètre de validation et de l'au moins un paramètre de validation prédéfini est ou inclut un identificateur de version ou une somme de contrôle.

9. Procédé selon l'une quelconque des revendications précédentes, dans lequel le code lisible par une machine est ou inclut un code-barres.

10. Procédé selon l'une quelconque des revendications précédentes, dans lequel le module électronique est un ordinateur individuel, un ordinateur portable, un téléphone intelligent ou une tablette avec une interface optique susceptible d'être capable de visuellement lire l'au moins un paramètre d'exploitation à partir du code lisible par une machine.
